# EUROPÄISCHE PATENTSCHRIFT

(11) **EP 1 096 644 B1**
(45) Veröffentlichungstag und Bekanntmachung des Hinweises auf die Patenterteilung: **24.05.2006**
(21) Anmeldenummer: 00122193.6
(22) Anmeldetag: 13.10.2000
(51) Int. Cl.: H02K 1/28

(54) **Rotorpaketbefestigung auf Keramikwelle**
Fastening of a rotorpackage on a ceramic shaft
Fixation d'un paquet rotorique sur un arbre céramique

(30) Priorität: 26.10.1999 DE 19951476
(43) Veröffentlichungstag der Anmeldung: 02.05.2001
(73) Patentinhaber: WILO AG, 44263 Dortmund (DE)
(72) Erfinder: Kaul, Günther, 58456 Witten (DE)
(74) Vertreter: COHAUSZ DAWIDOWICZ HANNIG & SOZIEN

(56) Entgegenhaltungen:
- EP-A- 0 038 728
- EP-A- 0 084 976
- DE-A- 2 502 778
- DE-A- 3 931 442
- GB-A- 1 284 351
- US-A- 4 377 762

## Beschreibung

Die vorliegende Erfindung betrifft einen Rotor einer elektrischen Maschine mit einem insbesondere zylindrisch geformten Rotorpaket, das auf einer Welle befestigt ist. Die Erfindung betrifft außerdem ein Verfahren zur Befestigung eines Rotorpaketes auf einer Welle aus keramischem Material.

Es ist bekannt, derartige Rotorpakete, die beispielsweise eine zylindrische Form haben und mehrere Permanentmagnete zusammenfassen, durch Umformung eines Teiles des Rotorpaketes auf einer Stahlwelle zu halten. Ein derart hergestellter Rotor ist beispielsweise aus der deutschen Offenlegungsschrift DE 2502778 bekannt. Die Welle ist hierbei glatt ausgeführt, wobei das Rotorblechpaket auf diese aufgepresst wird. Bei der Fertigung wird ein Rotorpaket auf eine Stahlwelle aufgeschoben und ein an dem Rotorpaket vorgesehene Kurzschlussring mittels eines Pressstempels druckbeaufschlagt, so dass das Material des Befestigungsteiles in radialer Richtung gegen die Welle fließt und so eine stabile Pressverbindung zwischen dem Rotorpaket und der Welle verursacht. Diese Art der Befestigung der Rotorpakete wird insbesondere bei Elektromotoren von Spaltrohrpumpen kleiner Leistung eingesetzt.

Bei solchen Pumpen ist es mitunter notwendig, statt der bekannten Stahlwellen Wellen aus einem keramischem Material zu verwenden. Dies gilt insbesondere, wenn von der Pumpe aggressive Medien gepumpt werden sollen und die Bauteile der Pumpe dem Medium ausgesetzt sind. Beim Einsatz der Keramikwellen ist das oben beschriebene Verfahren, das sich einer Fließumformung eines Befestigungsteiles bedient, jedoch ungeeignet, da die harte Keramikwelle bei Druckbeaufschlagung durch das fließende Befestigungsteil brechen kann. Die Gefahr der Zerstörung ist insbesondere dann gegeben, wenn sich das Rotorpaket bei hohen Temperaturen ausdehnt und die Presspassung einen zusätzlichen Druck auf die Welle ausübt.

Weiterhin ist aus dem US-Patent 4,377,762 ein Rotor mit einer aus einer Karbon-Stahl-Verbindung gefertigten Rotorwelle bekannt, der ein Rotorpaket mit einer Rotorwicklung aufweist, welchem stirnseitigen jeweils eine massive, den magnetischen Fluss führende und nicht rotationssymmetrische Rotorplatte zugeordnet ist, deren axiale Dicke der Hälfte der axialen Länge des Rotorpaketes entspricht. Die Rotorplatten sind aus einem Material gefertigt, das weicher ist, als das Material der Rotorwelle. Das Rotorpaket wird bei seiner Herstellung mit einer axialen Scherkraft zusammengepresst, die zwischen 13 und 18 Tonnen beträgt. Das Material der beiden Rotorplatten fließt aufgrund des derart hohen Scherdrucks in Ringnuten, die in die Rotorwelle eingebracht sind, und fixiert die Rotorplatten auf diese Weise axial. Aufgrund der hohen auf die Welle wirkenden Scherkräfte ist dieses Verfahren nur bei harten Rotorwellen einsetzbar. Eine derartige Befestigung des Rotorpakets ist bei keramisch ausgebildeten Wellen nicht möglich, da der spröde keramische Werkstoff aufgrund des auf ihn ausgeübten Umformdruckes brechen würde.

Aufgabe der vorliegenden Erfindung ist es, einen Rotor mit Keramikwelle zu schaffen, dessen Rotorpaket auf einfache und kostengünstige Weise fest mit der Welle verbunden ist, wobei die Rotorpaket-Befestigung unempfindlich gegen Temperaturschwankungen ist. Gleichzeitig ist es Aufgabe der Erfindung, ein Verfahren bereitzustellen, mit dem die sichere Befestigung eines Rotorpaketes auf einer keramischen Welle möglich ist.

Diese Aufgaben werden nach dem Rotor nach Anspruch 1 und dem Verfahren nach Anspruch 7 gelöst.

Die besonderen Vorteile der Erfindung resultieren daraus, dass bei der Herstellung der Keramikwellen eine oder mehrere Ausnehmungen in deren Oberfläche vorgesehen sind, in die jeweils ein durch gezielte Umformung des Befestigungsteiles hervorgerufener Vorsprung eingreift, wobei das Befestigungsteil durch einen Kurzschlussring oder ein Endblech gebildet sein kann. Als Ausnehmungen können Nuten oder Kerben in der Oberfläche vorgesehen sein, deren Tiefe mit insbesondere wenigen Zehntel Millimetern vergleichsweise gering ist. Mit diesen Ausnehmungen ist es möglich, die bisher lediglich für Metallwellen vorgesehene Art der Befestigung des Rotorpaketes, durch Umformung des Rotorpaketes auch bei Keramikwellen einzusetzen. Diese Art der Befestigung lässt sich besonders einfach bewerkstelligen und in der massenhaften Fertigung einsetzen. Dadurch werden die Herstellungskosten der Rotoren und damit der gesamten elektrischen Maschine gesenkt.

Als besonderes Einsatzgebiet der erfindungsgemäßen Rotoren sind insbesondere Spaltrohrpumpen anzusehen, die für die Förderung aggressiver Medien vorgesehen sind. Bei derartigen Pumpen ist die Welle direkt dem aggressiven Medium ausgesetzt, so dass der Einsatz von Keramikwellen angezeigt ist

Ein weiterer Vorteil der erfindungsgemäßen Rotoren ist, dass sie unempfindlich gegen die unterschiedliche Wärmeausdehnung des aus Metall gefertigten Rotorpaketes und der Keramikwelle sind. Die so hergestellten Rotore sind damit resistent gegen Wärmeausdehnung und es ist jederzeit eine feste Verankerung des Rotorpaketes auf der Welle gewährleistet.

Besonders vorteilhaft lässt sich die erfindungsgemäße Befestigung bei zylindrischen Rotoren einsetzen, bei denen ein metallischer Zylinder mehrere in einer Halterung gehaltene Permanentmagnete umgibt. Diese zylindrischen und geschlossenen Pakete werden vorteilhafter Weise bei Spaltrohrpumpen eingesetzt, da sie sich durch einen geringen Wasserwiderstand bei Drehung auszeichnen. An der Stirnseite der Zylinder sind entweder Kurzschlussringe oder Endbleche aus Metall angeordnet, die sich bevorzugt als Befestigungsteile einsetzen lassen. So kann im Herstellungsprozess das fertige Rotorpaket wie eine Hülse auf die Welle aufgeschoben und an entsprechender Stelle mittels der Umformung des Endbleches bzw. des Kurzschlussringes befestigt werden. Die Umformung geschieht dabei vorteilhafterweise durch gezielte Druckbeaufschlagung des Befestigungsteiles, so dass es an den entsprechenden Stellen des Befestigungsteiles zu einem Materialfluss in die Ausnehmungen hinein kommt. Das in die Ausnehmungen geflossene Material bildet dann die Vorsprünge.

Diese Fließumformung kann einerseits durch Pressstempel geschehen, die das Befestigungsteil etwas oberhalb der jeweiligen Ausnehmungen insbesondere in axialer Richtung druckbeaufschlagen. Es ist jedoch auch möglich, die Fließverformung durch magnetische Kräfte, die zumindest teilweise in radialer Richtung auf das Befestigungsteil wirken, hervorzurufen. Durch den erzeugten Materialfluss ist dabei auf jeden Fall gewährleistet, dass die Vorsprünge sicher in die Ausnehmungen eingreifen, da diese letztendlich die Formen der zu bildenden Vorsprünge darstellen. Das Entstehen eines Vorsprunges an einer falschen Stelle ist somit ausgeschlossen.

Es ist besonders vorteilhaft, wenn die Ausnehmung die Welle nicht umlaufend umgibt, sondern wenn die Ausnehmungen von einer oder mehreren Kerben gebildet werden, wobei mehrere Kerben die Welle in symmetrischer Kreisteilung umgeben. Durch die einzelnen Kerben ist gewährleistet, dass der Formschluss mit den Vorsprüngen nicht nur wie bei der umlaufenden Nut in axialer Richtung, sondern auch in radialer Richtung gegeben ist. Damit ist ein besonders sicherer Halt des Rotorpaketes auf der Welle gewährleistet.

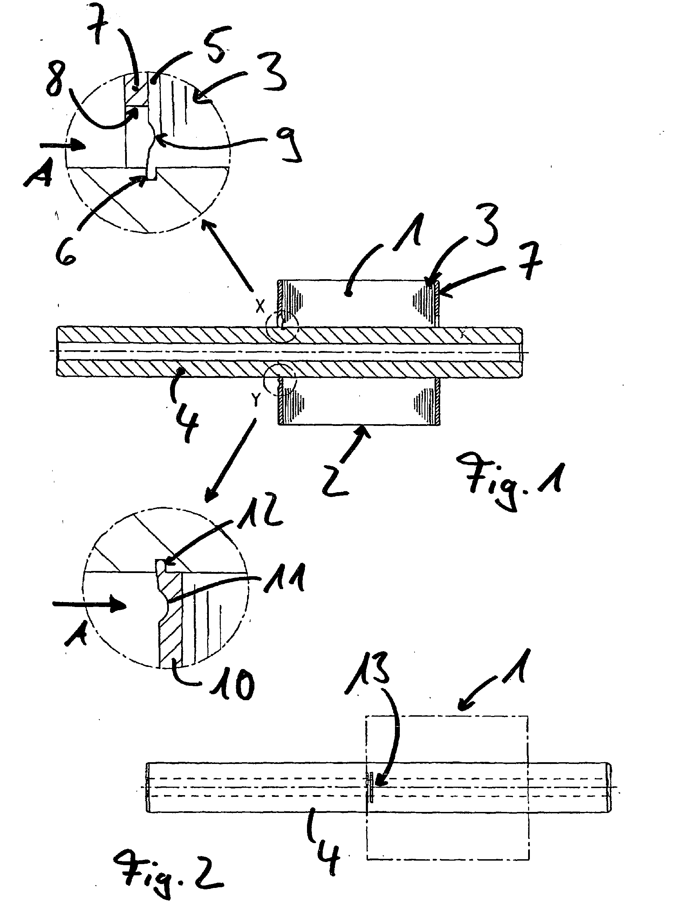

Eine besondere Ausführungsform des erfindungsgemäßen Rotors ist in den Figuren 1 und 2 dargestellt und wird im folgenden näher beschrieben. Es zeigen:
**Figur 1** einen Schnitt durch den erfindungsgemäßen Rotor und
**Figur 2** eine Aufsicht auf die Keramikwelle.

In Figur 1 ist ein Rotor einer elektrischen Maschine dargestellt, wie er für eine elektrisch betriebene und nasslaufende Spaltrohrpumpe verwendet werden kann. Der Rotor weist ein zylindrisches Rotorpaket 1 auf, das von einer metallischen Hülse 2 umgeben ist. Die Hülse umschließt nicht dargestellte Permanentmagnete, die seitlich von Endblechen 3 bedeckt werden. Das zylindrische Rotorpaket 1 ist auf einer Welle 4 aus Keramik gehalten.

Figur 1 zeigt nunmehr zwei Ausführungsformen des erfindungsgemäßen Rotors, wobei die Ausführungsform nach der Detailzeichnung X durch Formschluss des stirnseitigen Endbleches 5 in einer Ausnehmung 6 der Welle 4 gehalten ist. Das Paket der Endbleche 3 ist auch in dieser Ausführungsform von einem Kurzschlussring 7 stirnseitig bedeckt, wobei der Kurzschlussring 7 eine zentrale Öffnung 8 aufweist. Der Formschluss kommt durch Verstemmen des Endbleches 5 zustande, wobei ein Pressstempel das Endblech 5 in axialer Richtung druckbeaufschlagt und die Verformung 9 hinterlassen hat. Durch das Verstemmen ist das Material des Endbleches 5 in die Ausnehmung 6 geflossen und hat dort einen Vorsprung gebildet.

Bei der Ausführungsform nach der Detailzeichnung Y wurde der Druck durch den Pressstempel direkt auf den Kurzschlussring 10 ausgeübt, der die Endbleche 5 bedeckt. In diesem Falle weist der Kurzschlussring eine zentrale Bohrung auf, die lediglich ein geringes Übermaß gegenüber dem Außendurchmesser der Welle 4 aufweist. Das Presswerkzeug, das zum Verstemmen auf den Kurzschlussring 10 in axialer Richtung (Pfeil A) aufgesetzt wurde, hinterlässt die muldenartige Verformung 11, wobei das Material aus der Verformung 11 in die Ausnehmung 12 gelaufen ist und dort einen entsprechenden Vorsprung bildet.

In Figur 2 ist die Keramikwelle 4 gezeigt, wobei das Rotorpaket 1 lediglich mit strichpunktierter Linie angedeutet ist. Zu erkennen ist eine Ausnehmung 13, die auf dem Gesamtumfang der Welle 4 lediglich einen Teilkreis einnimmt. Von dieser Art können über den Umfang der Welle mehrere, beispielsweise vier, Ausnehmungen verteilt sein.

Um einen verbesserten Halt zu gewährleisten ist es möglich, die gegenüberliegende Stirnseite des Rotorpaketes auf ähnliche Weise zu befestigen.

## Patentansprüche

1. Rotor einer elektrischen Maschine mit einem zylindrisch geformten Rotor (1), der auf einer aus einem keramischen Werkstoff gefertigten Welle (4) befestigt ist, wobei die Welle (4) mindestens eine Ausnehmung (6,12,13) in ihrer Mantelfläche hat und wobei der Rotor (1) einen Kurzschlussring (10) oder ein Endblech (5) aufweist, der/ das mit einem durch Umformung des Kurzschlussringes (10) bzw. des Endblechs (5) hervorgerufenen Vorsprung am Kurzschlussring (10) bzw. am Endblech (5) in die Ausnehmung (6,12,13) eingreift.

2. Rotor nach Anspruch 1, **dadurch gekennzeichnet, dass** der Kurzschlussring (10) oder das Endblech (5) eine den als zylindrisches Rotorpaket ausgebildeten Rotor stirnseitig bedeckende Scheibe aus Metall ist.

3. Rotor nach Anspruch 1 oder 2, **dadurch gekennzeichnet, dass** die Umformung des Kurzschlussringes (10) oder des Endblechs (5) bei auf die Welle (4) aufgesetztem Rotorpaket (1) vorgenommen ist.

4. Rotor nach Anspruch 3, **dadurch gekennzeichnet, dass** die Umformung eine durch einen den Kurzschlussring (10) oder das Endblech (5) beaufschlagenden Pressstempel hervorgerufene Fließ-Umformung ist.

5. Rotor nach einem der vorherigen Ansprüche, **dadurch gekennzeichnet, dass** die Welle (4) mehrere in Kreisteilung angeordnete Ausnehmungen (6,12,13) aufweist, in die jeweils ein Vorsprung des Kurzschlussringes (10) bzw. des Endblechs (5) eingreift.

6. Rotor nach einem der vorherigen Ansprüche, **dadurch gekennzeichnet, dass** das Eingreifen eines Vorsprunges das Rotorpaket in axialer Richtung und in radialer Richtung formschlüssig auf der Welle (4) hält.

7. Verfahren zur Befestigung eines Rotorpaketes einer elektrischen Maschine auf einer Welle aus keramischem Material, **dadurch gekennzeichnet, dass** das Rotorpaket (1) auf die Welle (4) aufgeschoben wird und dass ein am Rotorpaket (1) befindlicher Kurzschlussring (10) oder befindliches Endblech (5) mit einem Druck beaufschlagt wird, so dass Material des Kurzschlussringes (10) bzw. des Endblechs (5) in mindestens eine Ausnehmung (6,12,13) fließt, die in der Mantelfläche der Welle (4) eingebracht ist.

8. Verfahren nach Anspruch 7, **dadurch gekennzeichnet, dass** die Druckbeaufschlagung in axialer Richtung durch einen Pressstempel erfolgt.

9. Verfahren nach Anspruch 7, **dadurch gekennzeichnet, dass** die Druckbeaufschlagung in radialer Richtung durch Magnetfelder (magnetisches Schrumpfen) erfolgt.

10. Verwendung des Rotors nach einem der Ansprüche 1 bis 6 in einer von einem Elektromotor betriebenen Kreiselpumpe, deren Rotor vom Stator durch einen Spalttopf oder ein Spaltrohr getrennt ist.

## Claims

1. Rotor of an electrical machine with a cylindrically shaped rotor (1) that is attached to a shaft (4) made of ceramic material, whereby the shaft (4) has at least one recess (6, 12, 13) in its surface and whereby the rotor (1) has a short-circuiting ring (10) or an end plate (5) and a projection, caused by deformation of the said short-circuiting ring (10) or of the said end plate (5), engages in the recess (6, 12, 13).

2. Rotor in accordance with claim 1, **characterized in that** the short-circuiting ring (10) or the end plate (5) is a metal disc covering the front face of the rotor that is formed as a cylindrical rotor set.

3. Rotor in accordance with claim 1, **characterized in that** the deformation of the short-circuiting ring (10) or the end plate (5) is carried out when the rotor set (1) has been mounted on the shaft (4).

4. Rotor in accordance with claim 3, **characterized in that** the deformation is flow-type deformation produced by application of a press die to the short-circuiting ring (10) or to the end plate (5).

5. Rotor in accordance with one of the above claims, **characterized in that** the shaft (4) has several recesses (6, 12, 13), distributed in a circular arrangement, in which a projection of the short-circuiting circuit (10) or of the end plate (5) engages.

6. Rotor in accordance with one of the preceding claims, **characterized in that** the engagement of a projection of the rotor set holds, in form-locking manner, in an axial direction and in a radial direction of the shaft (4).

7. Process for attaching a rotor set of an electrical machine to a ceramic shaft, **characterized in that** the rotor set (1) is pushed onto the shaft (4) and **in that** pressure is applied to the short-circuiting ring (10), or end plate (5), on the rotor component, so that material of the short-circuiting ring (10) or of the end plate (5) flows into at least one recess (6, 12, 13) in the surface of the shaft (4).

8. Process in accordance with claim 7, **characterized in that** pressure is applied in an axial direction by means of a press die.

9. Process in accordance with claim 7, **characterized in that** pressure is applied in a radial direction, by means of magnetic fields (magnetic shrinkage).

10. Use of the rotor in accordance with any one of claims 1 to 6 in a rotary pump, driven by an electromotor, the rotor of which is separated from the stator by a clearance top or a clearance tube.

## Revendications

1. Rotor d'une machine électrique avec un rotor conformé cylindrique (1), qui est fixé sur un arbre (4) fabriqué en un matériau céramique, l'arbre (4) ayant au moins un évidement (6, 12, 13) dans sa surface d'enveloppe et le rotor (1) présentant une bague court-circuitée (10) ou une plaque de bout (5) qui vient en prise dans l'évidement (6, 12, 13) par une saillie, engendrée par une déformation de la bague court-circuitée (10) ou respectivement de la plaque de bout (5), à la bague court-circuitée (10) ou respectivement à la plaque de bout (5).

2. Rotor selon la revendication 1,
**caractérisé par le fait que** la plaque court-circuitée (10) ou la plaque de bout (5) est un disque recouvrant du côté frontal le rotor constitué sous forme de paquet rotorique cylindrique.

3. Rotor selon la revendication 1 ou 2,
**caractérisé par le fait que** la déformation de la bague court-circuitée (10) ou de la plaque de bout (5) est entreprise avec le paquet rotorique (1) empilé sur l'arbre (4).

4. Rotor selon la revendication 3,
**caractérisé par le fait que** la déformation est une déformation de fluage entreprise par un poinçon de presse frappant la bague court-circuitée (10) ou la plaque de bout (5).

5. Rotor selon l'une des revendications précédentes,
**caractérisé par le fait que** l'arbre (4) présente plusieurs évidements (6, 12, 13) disposés en division angulaire dans lesquels vient en prise respectivement une saillie de la bague court-circuitée (10) ou respectivement de la plaque de bout (5).

6. Rotor selon l'une des revendications précédentes,
**caractérisé par le fait que** la prise d'une saillie maintient le paquet rotorique à fermeture géométrique en direction axiale et en direction radiale.

7. Procédé de fixation d'un paquet rotorique d'une machine électrique sur un arbre céramique,
**caractérisé par le fait que** le paquet rotorique (1) est enfilé sur l'arbre (4) et qu'une bague court-circuitée (10) ou une plaque de bout (5) se trouvant sur le paquet rotorique (1) est frappée par une pression de telle sorte que de la matière de la bague court-circuitée (10) ou respectivement de la plaque de bout (5) flue dans au moins un évidement (6, 12, 13) qui est mis en oeuvre dans la surface d'enveloppe de l'arbre (1).

8. Procédé selon la revendication 7,
**caractérisé par le fait que** la frappe par une pression a lieu en direction axiale par un poinçon de presse.

9. Procédé selon la revendication 7,
**caractérisé par le fait que** la frappe par une pression a lieu en direction radiale par des champs magnétiques (contraction magnétique).

10. Utilisation du rotor selon l'une des revendications 1 à 6 dans une pompe centrifuge entraînée par un moteur électrique dont le rotor est séparé du stator par un pot d'entrefer ou une gaine d'entrefer.
